Europäisches Patentamt

European Patent Office

Office européen des brevets

(11) Numéro de publication: **0 152 311**
**A2**

(12) # DEMANDE DE BREVET EUROPEEN

(21) Numéro de dépôt: **85400022.1**

(22) Date de dépôt: **08.01.85**

(51) Int. Cl.⁴: **F 16 B 2/18**
**B 62 D 1/16**

(30) Priorité: **20.01.84 FR 8400845**

(43) Date de publication de la demande:
**21.08.85 Bulletin 85/34**

(84) Etats contractants désignés:
**DE FR GB IT SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Anfray, Jean**
**7, Allée des Acacias**
**F-92360 Meudon la Foret(FR)**

(72) Inventeur: **Rykaert, Jean-Jacques**
**2, allée des Capucines**
**F-93220 Gagny(FR)**

(74) Mandataire: **Réal, Jacques et al,**
**Régie Nationale des Usines Renault SCE 0804**
**F-92109 Boulogne Billancourt Cedex(FR)**

(54) **Dispositif de fixation et de positionnement angulaire d'une platine en matière plastique sur un corps cylindrique.**

(57) L'invention a pour objet un dispositif de fixation et de positionnement angulaire d'une platine en matière plastique (10) sur un corps cylindrique (12).

Selon l'invention, le dispositif comporte un insert métallique en forme de collier (14) dont la surface interne (16) coopère par frottement avec la paroi externe (18) du corps cylindrique (12). Le serrage est assuré au moyen d'une clavette de serrage en coin (26).

Application à la fixation d'une platine sur un tube de direction de véhicule automobile.

FIG.1

EP 0 152 311 A2

DISPOSITIF DE FIXATION ET DE POSITIONNEMENT ANGULAIRE
D'UNE PLATINE EN MATIERE PLASTIQUE SUR UN CORPS
CYLINDRIQUE.

La présente invention a pour objet un dispositif de fixation et de positionnement angulaire d'une platine en matière plastique sur un corps cylindrique. Elle vise plus particulièrement la fixation et le positionnement d'une platine support de commande ou d'instrument sur le tube de direction d'une colonne de direction de véhicule automobile.

Lors de l'assemblage final du véhicule automobile, il est nécessaire de pouvoir positionner angulairement avec la plus grande souplesse de réglage possible et de fixer une platine en matière plastique servant de support soit à des commandes du véhicule soit à des instruments de bord. Cette fixation et ce positionnement angulaire doivent pouvoir être réalisés le plus simplement possible de façon à compenser les tolérances et les défauts de fabrication qui aboutissent le plus souvent à des défauts d'indexation angulaire des différents organes.

Dans ce but, l'invention propose un dispositif de fixation et de positionnement angulaire d'une platine en matière plastique sur un corps cylindrique, caractérisé en ce qu'il comporte un insert métallique en forme de collier dont la surface interne coopère par frottement avec la paroi externe du corps cylindrique et dont les deux extrémités se chevauchent pour définir avec la paroi externe du corps cylindrique un logement pour une clavette de serrage en coin, et des moyens de serrage permettant de déplacer la clavette dans son logement.

Selon une autre caractéristique de l'invention, la clavette est susceptible d'être déplacée parallèlement à l'axe du corps cylindrique par des moyens de serrage constitués par une vis dont l'extrémité filetée est vissée dans la clavette et dont la tête prend appui par l'intermédiaire d'une plaque d'appui sur les bords latéraux en vis-à-vis des extrémités du collier.

On comprend que grâce à un tel dispositif, le positionnement angulaire et la fixation de la platine support sur le corps cylindrique peuvent être assurés simultanément par une seule et unique opération consistant à serrer la vis qui provoque le serrage du collier sur le corps cylindrique, ce dernier étant inserré dans la matière plastique constituant la platine support. De même, lors d'une intervention ultérieure, un simple déserrage de la clavette au moyen de la vis de serrage permet de libérer la platine en vue de son démontage ou de son nouveau positionnement angulaire par rapport au corps cylindrique.

D'autres avantages et caractéristiques de l'invention apparaîtront plus clairement à la lecture de la description qui va suivre pour la compréhension de laquelle on se reportera avantageusement au dessin annexé dans lequel :

- la figure 1 est une vue en coupe axiale selon la ligne 1 - 1 de la figure 2 d'un dispositif de fixation et de positionnement angulaire réalisé conformément aux enseignements de la présente invention et impliqué au montage d'un support plastique sur un tube de direction de véhicule automobile ;

- la figure 2 est une vue selon la flèche F de la figure 1 ; et

- la figure 3 est une vue de dessus du collier de serrage représenté aux figures 1 et 2.

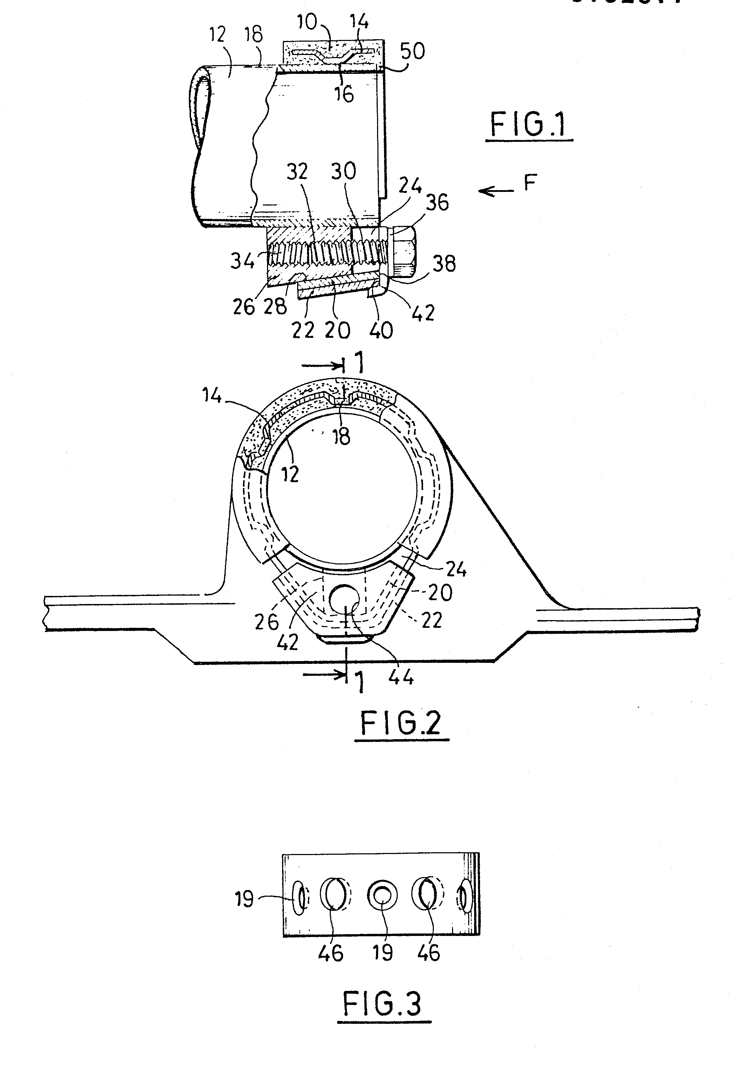

On a représenté aux figures 1 et 2 une platine ou support en matière plastique 10 dont on désire assurer le positionnement angulaire et la fixation sur le tube 12 d'une colonne de direction de véhicule automobile.

Conformément aux enseignements de la présente invention, le dispositif de fixation comporte un insert métallique en forme de collier 14 qui est inserré dans la matière plastique de la platine 10. La surface interne 16 du collier 14 coopère par frottement avec la paroi externe 18 du tube de direction 12. Dans le mode de réalisation représenté aux figures, la surface interne 16 du collier 14 en contact de frottement avec la paroi externe 18 du tube 12 est constituée par une série de déformations 18 régulièrement réparties le long du collier 14 de façon à constituer des zones sensiblement ponctuelles de frottement entre le collier 14 et le tube 12. Cette série de déformations 18 permet ainsi d'assurer une répartition régulière des efforts de frottement entre le collier 14 et le tube 12 lors du serrage de celui-ci.

Afin de permettre le serrage du collier 14 autour du tube de direction 12, les extrémités 20 et 22 du collier 14 sont repliées deux fois et se chevauchent pour définir avec une portion de la paroi externe 18 du tube 12 un logement 24 dans lequel est disposée une clavette de serrage 26.

Comme on peut le constater à la figure 1, la clavette de serrage 26 est une clavette de serrage en coin disposée dans le logement 24 entre la paroi externe 18 du tube 12 et la face interne 28 de l'extrémité 20 du collier 14.

Pour permettre le serrage du collier 14, il est nécessaire, dans le mode de réalisation représenté, de déplacer la clavette 26 parallèlement à l'axe du tube de direction 12 vers la droite en considérant la figure 1. A cet effet, les moyens de serrage sont constitués par une vis 30 dont l'extrémité filetée 32 est vissée dans un trou taraudé 34 de la clavette 26 et dont la tête 36 prend appui sur les bords latéraux 38 et 40 en vis-à-vis des extrémités 20 et 22 du collier 14. La tête 36 de la vis 30 prend appui sur les bords latéraux 38 et 40 du collier 14 par l'intermédiaire d'une plaque d'appui 42 disposée entre la tête de la vis 36 et les bords latéraux 38 et 40 et qui est munie d'un trou 44 permettant le passage du corps de la vis 30.

Comme on peut le constater aux figures 2 et 3, le collier 14 comporte également une série de trous 46 uniformément répartis le long du collier 14 en alternance avec les déformations 18. Les trous 46 sont comblés par la matière plastique de la platine 10 qui y pénètre lors de l'opération de surmoulage de la platine sur l'insert 14 de façon à assurer le positionnement et le maintien du collier dans la platine 10.

Afin d'assurer un bon guidage axial de la platine 10 sur le tube de direction 12 lors de sa mise en place, le corps de la platine 10 est muni d'un alésage cylindrique 48 correspondant sensiblement au diamètre du

0152311

tube de direction 12 et dont la paroi interne en
matière plastique vient en affleurement de la surface
interne 16 des déformations 18 du collier 14.

Par ailleurs, afin d'assurer un positionnement axial
correct de la platine 10 à l'extrémité du tube de
direction 12, le corps en matière plastique de la platine 10 possède un épaulement radial 50 qui prend
appui sur l'extrémité libre du tube 12.

On comprend aisément qu'on a ainsi un dispositif dans
lequel le collier, après avoir réalisé un positionnement de la platine, permet par son serrage mécanique
d'assurer une fixation mécanique de cette dernière.

REVENDICATIONS

1. Dispositif de fixation et de positionnement angulaire d'une platine (10) en matière plastique sur un corps cylindrique (12), caractérisé en ce qu'il comporte un insert métallique en forme de collier (14) dont la surface interne (16) coopère par frottement avec la paroi externe (18) du corps cylindrique (12) et dont les deux extrémités (20, 22) se chevauchent pour définir avec la paroi externe (18) du corps cylindrique (12) un logement (24) pour une clavette de serrage en coin (26), et des moyens de serrage (30) permettant de déplacer la clavette (26) dans son logement (24).

2. Dispositif selon la revendication 1, caractérisé en ce que la clavette (26) est susceptible d'être déplacée parallèlement à l'axe du corps cylindrique (12) par des moyens de serrage constitués par une vis dont l'extrémité filetée (32) est vissée dans la clavette (26) et dont la tête (36) prend appui, par l'intermédiaire d'une plaque d'appui (42) sur les bords latéraux (38, 40) en vis-à-vis des extrémités (20, 22) du collier (14).

3. Dispositif selon l'une quelconque des revendications 1 ou 2, caractérisé en ce que le collier (14) comporte une série de déformations (18) régulièrement réparties s'étendant depuis sa surface interne vers la paroi externe du corps cylindrique.

4. Dispositif selon l'une quelconque des revendications 1 ou 2, caractérisé en ce que le collier (14) comporte une série de trous (46) comblés par la matière plastique de la platine (10) de façon à assurer le positionnement et le maintien de l'insert dans cette dernière.

0152311

FIG.1

F

FIG.2

FIG.3